# EUROPÄISCHE PATENTSCHRIFT

(11) **EP 0 927 117 B1**
(45) Veröffentlichungstag und Bekanntmachung des Hinweises auf die Patenterteilung: **19.04.2000**
(21) Anmeldenummer: 97909139.4
(22) Anmeldetag: 17.09.1997
(51) Int. Cl.: B60R 21/32

(54) **SCHALTUNGSANORDNUNG ZUR STROMBEGRENZUNG IN EINEM SCHUTZSYSTEM, INSBESONDERE AIRBAG-STEUERSYSTEM**
CIRCUIT ARRANGEMENT FOR LIMITING CURRENT IN A PROTECTIVE SYSTEM, IN PARTICULAR AN AIRBAG-CONTROL SYSTEM
CIRCUIT PERMETTANT DE LIMITER LE COURANT DANS UN SYSTEME DE PROTECTION, NOTAMMENT UN SYSTEME DE COMMANDE D'AIRBAG

(30) Priorität: 19.09.1996 DE 19638457
(43) Veröffentlichungstag der Anmeldung: 07.07.1999
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: DE9702091
(87) Internationale Veröffentlichungsnummer: WO9812082

(56) Entgegenhaltungen:
- EP-A- 0 590 666
- EP-A- 0 679 554

## Beschreibung

Die Erfindung betrifft eine Schaltungsanordnung gemäß Oberbegriff des Anspruchs 1.

Kraftfahrzeug-Airbag-Systeme weisen gewöhnlich durch elektrischen Stromfluß ausgelöste Zündpillen auf. Als Energiequelle dient vielfach ein Zündkondensator. Wegen dessen begrenztem Energieinhalt muß für den Auslösefall der Zündstrom begrenzt werden. Aus der EP-A-0 284 728 ist es zu diesem Zweck für ein mit mehreren Airbags versehenes System bekannt, mittels einer in dem betreffenden Serienzweig liegenden Kapazität die durch diesen Serienzweig fließende Ladungsmenge zu begrenzen. Ist die betreffende Kapazität aufgeladen, wird der Stromfluß unterbrochen, wodurch die Zündpille des Serienzweigs gezündet werden kann.

Bei einem anderen Airbag-System gemäß WO 90/02674 wird vorgeschlagen, den durch Leistungsschalter in Serie zu einer Auslöseeinrichtung fließenden Strom zu begrenzen. Im einzelnen besteht die Strombegrenzung darin, den Spannungsabfall an nachgeschalteten Widerständen zu erfassen und mit Referenzspannungen in einem Komparator zu vergleichen. Der Komparator gibt an die Leistungsschalter ein Signal, das den Pegel des Stromflusses begrenzt. Dies ermöglicht es im Fall des bekannten Airbag-Systems, mit einem Zündkondensator auszukommen.

Eine weitere Maßnahme zur Strombegrenzung in einer Schaltungsanordnung zum Zünden einer Airbag-Zündpille kann darin bestehen, den Strom begrenzende Schalter am Eingang und Ausgang der Zündpille vorzusehen. Mit dem Spannungsabfall über den Schaltern ist ein hoher Energieverlust verbunden. Dies führt dazu, daß der Zündkondensator größer dimensioniert werden muß, was andererseits für dessen eigentliche Funktion eine Überdimensionierung bedeutet.

Der Erfindung liegt die Aufgabe zugrunde, eine Zündstrombegrenzung in einer Schaltungsanordnung eines Schutzsystems, insbesondere zum Zünden der Zündpille eines Airbag-Systems, vorzusehen, die energiesparend und kostengünstig ist.

Diese Aufgabe ist erfindungsgemäß bei einer Schaltungsanordnung mit den Merkmalen des Anspruchs 1 gelöst.

Die Erfindung hat den Vorteil, daß mit einfachen Schaltungsmitteln, nämlich durch den Schaltregler in Kombination mit dem Tiefpaßfilter, der Mittelwert des Stroms, einschließlich Anstiegs- und Abfallzeit des Stroms durch die Zündpille, begrenzt ist. Es kommt auf diese Weise zu einem sehr geringen Spannungsabfall und damit reduzierter Verlustleistung an den in der Schaltungsanordnung vorgesehenen Schaltern. Hierdurch ist die Lebensdauer der Schalter erhöht und der Zündkondensator kann kleiner dimensioniert werden.

Vorteilhafte Ausgestaltungen der Erfindung sind Gegenstand der Unteransprüche.

Ein Ausführungsbeispiel der Erfindung wird im folgenden anhand der Zeichnung erläutert. In der Zeichnung zeigen:
Figur 1: Ein schematisches Schaltbild der erfindungsgemäßen Schaltungsanordnung,
Figur 2: Ein schematisches Blockschaltbild der Schaltungsanordnung und
Figur 3: Ein Diagramm, das den Stromverlauf veranschaulicht.

Die dargestellte Schaltungsanordnung dient zum Auslösen eines Kraftfahrzeug-Airbag-Systems. Als Energiequelle für die Zündung einer Zündpille 2 dient ein Zündkondensator 4. Mit den beiden Anschlüssen des Zündkondensators 4 (Schaltungspunkte SP1, SP2) sind jeweils ein sogenannter High- und Lowside-Schalter 6, 8 verbunden, zwischen denen andererseits (Schaltungspunkte SP3, SP4) eine Gleichrichterdiode 10 geschaltet ist.

Zwischen die Gleichrichterdiode 10 und die Zündpille 2 ist ein Tiefpaßfilter 20 geschaltet. Der Tiefpaßfilter 20 umfaßt eine Induktivität 22 (zwischen den Schaltungspunkten SP3 und SP5) und eine Kapazität 24 (zwischen den Schaltungspunkten SP5 und SP6) parallel zur Zündpille 2.

Zwischen den Schaltungspunkten SP6 und SP4 ist ein Stromfühler 30 für den durch die Zündpille 2 fließenden Strom I angeordnet, dessen Ausgang mit einem ersten Eingang 34 eines Komparators 32 mit Hysterese + /- Δ verbunden ist. Der zweite Eingang 36 des Komparators 32 ist mit einem Referenzstromwert-Ausgabemittel 38 verbunden, das den Referenzstromwert I₀ ausgibt. Der Ausgang 40 des Komparators 40 ist mit dem einen Eingang eines UND-Glieds 46 verbunden. Der andere Eingang des UND-Glieds 46 steht mit einem mit einer Auswerteschaltung 50 für den Airbag verbundenen Auslöseschalter 48 in Verbindung. Über den Schaltungspunkt SP8 ist der Ausgang des UND-Glieds mit Steuereingängen 42, 44 der beiden Schalter 6, 8 verbunden. Die Schalter 6, 8 werden somit abhängig vom festgestellten Wert des Stroms I betätigt.

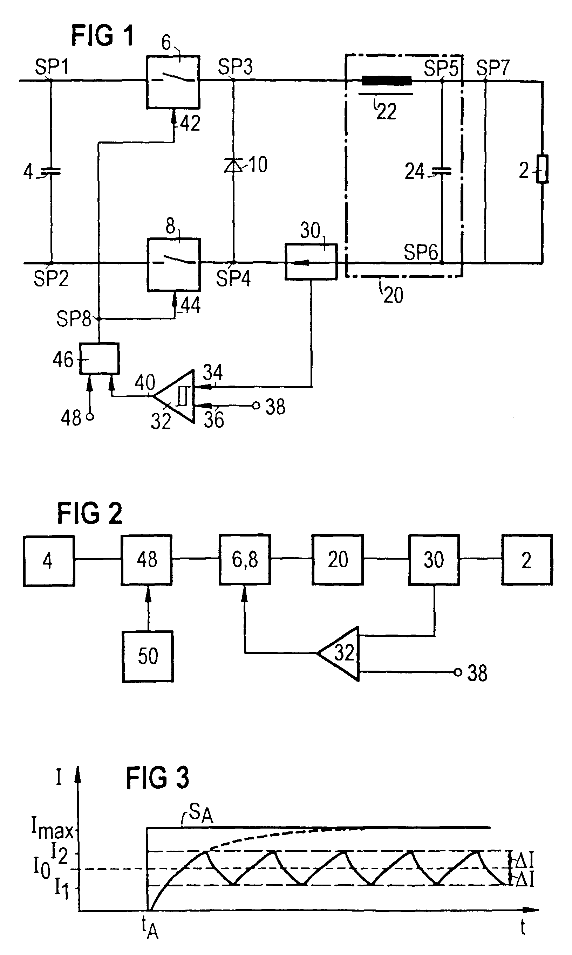

Die Funktionsweise der beschriebenen Schaltungsanordnung ist die folgende. Zum Zeitpunkt t_{A} wird das Auslösesignal SA von der Auswerteschaltung 50 über den Auslöseschalter 48 auf das UND-Glied 46 gegeben. Durch das Auslösesignal S_{A} kann ein sehr großer Strom mit einer maximalen Stromstärke Iₘₐₓ auf die Zündpille gelegt werden. Bei gleichzeitig anliegendem Ausgangssignal des Komparators 32 werden die Schalter 6, 8 geschlossen. Durch den Schaltregler wird der Strom I auf den Referenzwert I₀ geregelt. Das Zeitdiagramm von Figur 3 zeigt den Stromverlauf und verdeutlicht die Begrenzung des Mittelwerts des Stroms I zwischen I1 und I2 und auch der Anstiegs- und Abfallzeit des Stroms I durch die Zündpille 2, der ansonsten ohne Schaltregler den in Figur 3 gestrichelten Verlauf annehmen würde. Die in der Induktivität 22 und der Kapazität 24 des Tiefpaßfilters 20 gespeicherte Energie wird über die Diode 10 in die Zündpille 2 geleitet. Dadurch erfolgt die Glättung des Stroms durch die Zündpille 2. Überschreitet der Strom I den Grenzwert I₀ + Δ, werden die Schalter 6, 8 ausgeschaltet und der Strom fällt. Unterschreitet der Strom I den Grenzwert I₀ - Δ, werden die Schalter 6, 8 wieder eingeschaltet. Dies wiederholt sich, bis der Strom I durch die Zündpille 2 nicht mehr den Grenzwert I₀ + Δ überschreitet. Die Periode dieses Vorgangs ist bestimmt durch die Grenzfrequenz des Filters und die Hysterese des Komparators. Wird dann der Grenzwert +Δ nicht mehr überschritten, bleiben die Schalter 6, 8 geschlossen.

Der Spannungsabfall an den Schaltern 6, 8 und mithin die Verlustleistung ist gering.

## Patentansprüche

1. Schaltungsanordnung zum Auslösen eines Schutzsystems mit Zündpille (2), insbesondere zum Zünden der Zündpille (2) eines Airbag-Systems, dadurch gekennzeichnet, daß ein Schaltregler (6, 8, 30, 32) mit einem Tiefpaßfilter (20) vorgesehen ist, durch die die Mittel- und Spitzenwerte des Stroms Iₘₐₓ durch die Zündpille (2) begrenzt sind.

2. Schaltungsanordnung nach Anspruch 1, dadurch gekennzeichnet, daß der Tiefpaßfilter (20) ein LC-Glied ist.

3. Schaltungsanordnung nach Anspruch 1, dadurch gekennzeichnet, daß ein Schalter (6, 8) vorgesehen ist, der unterhalb eines Soll-Stromwerts I₀ eingeschaltet ist.

4. Schaltungsanordnung nach Anspruch 3, dadurch gekennzeichnet, daß auf beiden Seiten des Tiefpaßfilters (20) jeweils ein Schalter (6, 8) vorgesehen ist.

5. Schaltungsanordnung nach Anspruch 3, dadurch gekennzeichnet, daß auf der Ausgangsseite des Tiefpaßfilters (20) ein Komparator (32) vorgesehen ist, der einen mit einem Stromfühler (30) verbundenen Eingang (34) für den Ist-Stromwert I und einen Eingang (36) für den Soll-Stromwert I₀ aufweist und dessen Ausgang (40) mit dem Steuereingang (42, 44) des Schalters (6, 8) verbunden ist.

6. Schaltungsanordnung nach Anspruch 1, dadurch gekennzeichnet, daß der Komparator (32) ein Komparator mit Hysterese +/- Δ ist.

7. Schaltungsanordnung nach Anspruch 5, dadurch gekennzeichnet, daß der Ausgang des UND-Glieds (46) mit dem Steuereingang (42, 44) des Schalters (6, 8) verbunden ist, wobei auf das UND-Glied (46) das Auslösesignal und das Ausgangssignal des Komparators (32) gegeben wird.

## Claims

1. A circuit arrangement for triggering a protective system with a detonating cap (2), particularly for firing the detonating cap (2) of an airbag system, characterised in that a switch controller (6, 8, 30, 32) is provided with a low-pass filter (20) through which the mean and peak values of the current Iₘₐₓ through the detonating cap (2) are limited.

2. Circuit arrangement in accordance with claim 1, characterised in that the low-pass filter (20) is an LC element.

3. Circuit arrangement in accordance with claim 1, characterised in that a switch (6, 8) is provided which is switched on below a set current value I₀.

4. Circuit arrangement in accordance with claim 3, characterised in that a switch (6, 8) is provided at both ends of the low-pass filter (20).

5. Circuit arrangement in accordance with claim 3, characterised in that a comparator (32) is provided at the output end of the low-pass filter (20), which has an input (34) connected to a current sensor (30) for the actual current value I and an input (36) for the set current value I₀, and whose output (40) is connected to the control input (42, 44) of the switch (6, 8).

6. Circuit arrangement in accordance with claim 1, characterised in that the comparator (32) is a comparator with hysteresis ± Δ,

7. Circuit arrangement in accordance with claim 5, characterised in that the output of the AND element (46) is connected to the control input (42, 44) of the switch (6, 8), whereby the trigger signal and output signal of the comparator (32) are applied to the AND element (46).

## Revendications

1. Circuit pour déclencher un système de protection comportant une pastille d'amorçage (2), en particulier pour l'amorçage de la pastille d'amorçage (2) d'un système de coussin d'air,
caractérisé en ce qu'il est prévu un régulateur de commutation (6, 8, 30, 32) comportant un filtre passe-bas (20), par lesquels les valeurs moyenne et de pointe du courant Iₘₐₓ traversant la pastille d'amorçage (2) sont limitées.

2. Circuit suivant la revendication 1, caractérisé en ce que le filtre passe-bas (20) est un élément LC.

3. Circuit suivant la revendication 1, caractérisé en ce qu'il est prévu un interrupteur (6, 8) qui est enclenché en-dessous d'une valeur de consigne I₀ de l'intensité du courant.

4. Circuit suivant la revendication 3, caractérisé en ce qu'il est prévu, sur chacun des deux côtés du filtre passe-bas (20), un interrupteur (6, 8).

5. Circuit suivant la revendication 3, caractérisé en ce que, du côté de sortie du filtre passe-bas (20), il est prévu un comparateur (32) qui comporte une entrée (34), reliée à un détecteur de courant (30), pour la valeur réelle I de l'intensité du courant et une entrée (36) pour la valeur de consigne I₀ de l'intensité du courant, et dont la sortie (40) est reliée à l'entrée de commande (42, 44) de l'interrupteur (6, 8).

6. Circuit suivant la revendication 1, caractérisé en ce que le comparateur (32) est un comparateur avec hystérésis +/- Δ.

7. Circuit suivant la revendications 5, caractérisé en ce que la sortie de l'élément "ET" (46) est reliée à la sortie (42, 44) de l'interrupteur (6, 8), le signal de déclenchement et le signal de sortie du comparateur (32) étant envoyés à l'élément "ET" (46).
